# EUROPEAN PATENT SPECIFICATION

(11) **EP 2 219 949 B1**
(45) Date of publication and mention of the grant of the patent: **29.04.2015**
(21) Application number: 08849570.0
(22) Date of filing: 14.11.2008
(51) Int. Cl.: F16B 37/14, F16B 43/00, F16B 33/00, B64D 45/02

(54) **PROTECTION DEVICE AGAINST ELECTRICAL DISCHARGES IN FIXING ELEMENTS WITH HIGH CHARGES**
SCHUTZVORRICHTUNG GEGEN ELEKTRISCHE ENTLADUNGEN IN BEFESTIGUNGSELEMENTEN MIT HOHEN LADUNGEN
DISPOSITIF DE PROTECTION CONTRE LES DÉCHARGES ÉLECTRIQUES DANS DES ÉLÉMENTS DE FIXATION À CHARGES ÉLEVÉES

(30) Priority: 15.11.2007 ES 200703022
(43) Date of publication of application: 25.08.2010
(73) Proprietor: Airbus Operations, S.L., 28902 Madrid (ES)
(72) Inventor: MARTÍN HERNÁNDEZ, Agustín Mariano, E-28902 Getafe, Madrid (ES)
(74) Representative: Elzaburu Marquez, Alberto
(86) International application number: PCT/EP2008/065579
(87) International publication number: WO 2009/063063

(56) References cited:
- EP-A- 0 153 487
- EP-A- 0 425 292
- WO-A-02/089280
- US-A- 4 295 766

## Description

### FIELD OF THE INVENTION

The present invention relates to a device for protecting conductive fixing elements subject to high charges against electrical discharges, particularly for aircraft.

### BACKGROUND OF THE INVENTION

In certain mechanical or structural applications it is necessary to effectively prevent the possibility that a spark between two conductive fixing elements is generated, or between a fixing element and another conductive element, which are at electric potentials. These different electrical potentials can be caused by the presence of an electric current, by electrical impacts such as atmospheric discharge or lighting, by a static charge due to friction, etc.

Preventing these discharges can be a safety requirement in some applications, such as in fixings in border areas or areas of the inside of fuel tanks for aircraft for example.

There are various processes known to prevent these discharges between fixing elements from occurring, one of which consists of covering the conductive fixing element with a device comprising in turn a cap and a washer, both made of dielectric material.

Document US 4,295,766, which is considered being the closest prior art, relates to such a process and discloses the preamble of claim 1.

Dielectric materials, such as nylon, are not suitable to be installed in fixing elements that are going to be subjected to high charges since their resistance is typically low.

In the previous case, if a washer made of dielectric material is used in the case of fixing elements subjected to high charges, the resistance of the material of the washer then is not suitable. In this case, the high charges could damage the washer such that the following problems would occur:
- the device would not correctly prevent the discharges since the washer would crack or break, which would provide a path for the spark through the break; furthermore, the cap would not be correctly installed, there being the additional risk that this damage would not occur during the installation, but rather during the operation of the joining, whereby discovering the failure would be more difficult;
- the fixing element might not be correctly installed, therefore if the washer breaks, the head of the bolt, the nut, the rivet or ring -according to the type of joining element and where the device is installed- would be without a support surface, therefore the fixing element would not be correctly transmitting the charge, consequently causing a failure in the fixing.

The present invention is oriented towards a solution to these drawbacks.

### SUMMARY OF THE INVENTION

The present invention thus proposes a device for protecting conductive fixing elements subjected to high charges against electrical discharges, protecting the fixing elements between each other or protecting a fixing element and another conductive element, particularly for aircraft. The device of the invention comprises a cap, a washer and an o-ring gasket. The cap and the o-ring gasket are made of non-conductive insulating material, whereas the washer is metal. The metal washer is retained by the fixing element subjected to a high charge that must be protected, whereas the cap and the o-ring gasket non-conductively surround the fixing element in question, thus preventing the possibility of electrical discharges.

Other features and advantages of the present invention will be understood from the following detailed description of an illustrative embodiment of its object in relation to the attached figures.

### DESCRIPTION OF THE FIGURES

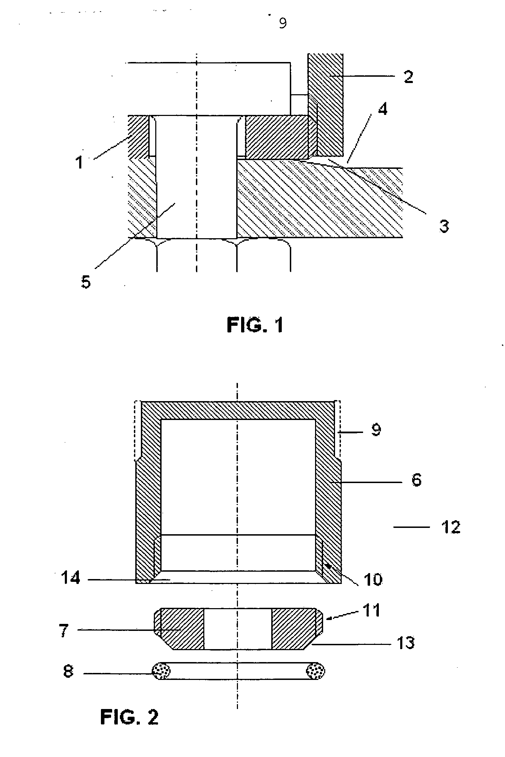

Figure 1 shows a sectional view of the arrangement of a device with the metal washer for protecting against electrical discharges without installing the o-ring gasket.
Figure 2 shows a sectional view of the device for protecting against electrical discharges according to a first embodiment of the invention.
Figure 3 shows a sectional view of the device for protecting against electrical discharges according to a second embodiment of the invention.
Figures 4a and 4b show sectional views of the device for protecting against electrical discharges according to first and second embodiments of the invention, respectively, arranged on a standard conductive fixing bolt.
Figures 5a and 5b show sectional views of the device for protecting against electrical discharges according to first and second embodiments of the invention, respectively, arranged on a standard conductive rivet.

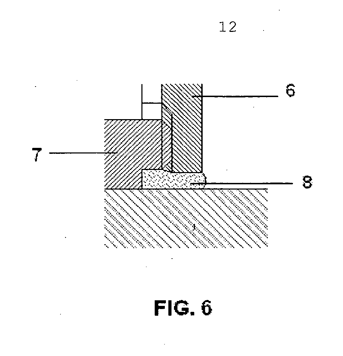

Figure 6 shows a sectional view of a detail of the installation of the o-ring gasket of the device for protecting against electrical discharges of the invention.

### DETAILED DESCRIPTION OF THE INVENTION

The present invention thus proposes a device 12 for protecting conductive fixing elements 5, or a fixing element and another conductive element (not shown), against electrical discharges between each other. The mentioned fixing elements 5 are subjected to high charges. The device 12 according to the invention comprises a cap 6, a washer 7 and an o-ring gasket 8.

A device to prevent electrical discharges of a fixing element 5 subjected to high charges comprising a cap 2 made of non-conductive insulating material and a washer 1 made of metal material to support the charges of the fixing element 5, would make it so that any imperfection 4 in the surface on which the washer 1 or an incorrect installation of the mentioned washer 1 is supported would allow there to be a path 3 so that a discharge could jump to another component, since the material of the washer 1 does not have non-conductive properties.

The washer 7 of the device 12 according to the invention is located below the fixing element 5 that must be protected against discharges, in turn being retained by said fixing element 5, which further prevents the movements of the mentioned washer 7. The shape of this washer 7 is preferably round, being thicker than conventional washers. The washer 7 is made of metal material, such as aluminum, steel or titanium, having a threading 11 on its outer face ending with a considerable bevel 13 on its lower part.

The cap 6 is an open, preferably cylindrical receptacle closed at one of its ends and with an opening at the other end, the shape and dimensions of which coincide with those of the outer face of the washer 7. The lower part of the inner face of the cap 6 comprises a threading 10 which is complemented with the threading 11 of the washer 7 and which is used to fix the cap 6 to the washer 7 during the installation of the protection device 12. This threading 10, 11 has automatic blocking properties so that it prevents the cap 6 from separating from the washer 7, ending in its lower inner part with a bevel 14. According to a preferred embodiment of the invention, the cap 6 comprises a recess 9 in the upper part of its outer face in order to make installing the mentioned cap 6 with conventional tools easier during the application of the installation tightening torque. The cap 6 is preferably made of a dielectric material, such as nylon or a high resistance plastic.

The o-ring gasket 8 has the suitable shape and dimensions so as to fit in the groove generated by the bevels 13, 14 of the lower areas of the washer 7 and of the cap 6. This o-ring gasket 8 is made of a flexible material with non-conductive properties, such as nitrile rubber or silicone rubber. Once the cap 6 is installed, it applies pressure on the o-ring gasket 8.

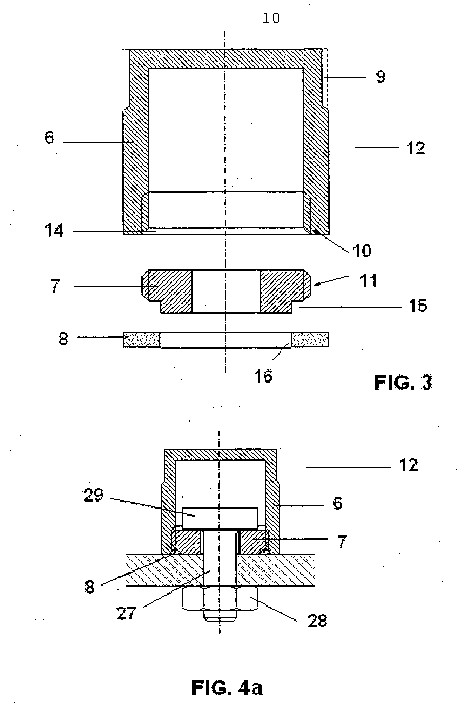

According to a second embodiment of the invention, the washer 7 has a channel 15 in the lower part of its outer face instead of comprising the bevel 13, the cap 6 does not comprise the bevel 14 and the o-ring gasket 8 has the suitable shape and dimensions so as to fit in the groove of the washer 7, having an outer bevel 16, on which the cap 6 will be placed (see Figure 3).

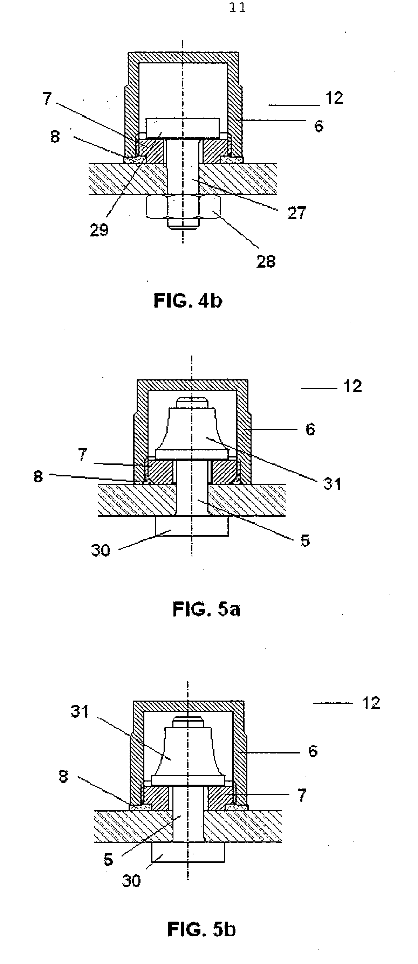

Once the device 12 with its components, cap 6, washer 7 and o-ring gasket 8, are installed together with a fixing element 5, according to Figures 4a, 4b, 5a and 5b, said fixing element 5 is surrounded in all directions by a non-conductive material, preferably by a dielectric material, so that it is not possible that an electrical discharge originates in the mentioned fixing element 5. In addition, once the o-ring gasket is pressured by the cap 6, the former closes all possible gaps between the washer 7 and the surface on which said washer 7 is placed, therefore eliminating all the mentioned drawbacks inherent to using metal washers 1.

Figures 4a and 4b show an example of the installation of the protection device 12 of the invention, according to a first and second embodiment thereof respectively, in the particular case in which that the fixing element 5 is subjected to a high charge, comprising a standard bolt 27 with a nut 28, the cap 6 of the device 12 being arranged in the area of the head 29 of the bolt 27.

Figures 5a and 5b show another example of the installation of the protection device 12 of the invention, according to a first and second embodiment thereof respectively, in the particular case in which the fixing element 5 comprises a rivet 30 and a bushing 31, the cap 6 of the device 12 being arranged in the area of the bushing 31.

In the case of protecting two fixing elements 5 from electrical discharges between each other, a device 12 will be arranged with its cap 6, its washer 7 and o-ring gasket 8 in at least one of the fixing elements 5 to be protected. In the event that a fixing element 5 is to be protected from electrical discharges and another conductive component (not shown) the mentioned device 12 would be arranged on the fixing element 5.

In the preferred embodiments that were just described, modifications comprised within the scope defined by the following claims can be introduced.

## Claims

1. Aircraft lightning protection device (12) for protecting a conductive fixing element (5) of an aircraft subjected to a high charge against electrical discharges, **characterized in that** the device (12) comprises a cap (6) made of non-conductive material, a washer (7) made of conductive metal material and an o-ring gasket (8) made of non-conductive material retained by the washer (7), the washer (7) adapted to be retained by the fixing element (5) subjected to a high charge that must be protected, and the cap (6) and the o-ring gasket (8) adapted to non-conductively surround the fixing element (5), thus preventing the possibility of electrical discharges.

2. A device (12) for protecting a conductive fixing element (5) of an aircraft subjected to high charges against electrical discharges according to claim 1, **characterized in that** the cap (6) is a cylindrical open receptacle closed at one of its ends and open at the other, comprising a threading (10) in the lower part of its inner face.

3. A device (12) for protecting a conductive fixing element (5) of an aircraft subjected to high charges against electrical discharges according to claim 2, **characterized in that** the washer (7) is round and thick, comprising a threading (11) on its outer face, which is complemented with the threading (10) of the cap (6) to fix the cap (6) to the washer (7) during the installation of the device (12).

4. A device (12) for protecting a conductive fixing element (5) of an aircraft subjected to high charges against electrical discharges according to claim 3, **characterized in that** the threading (10, 11) has automatic blocking properties to prevent the cap (6) from separating from the washer (7).

5. A device (12) for protecting a conductive fixing element (5) of an aircraft subjected to high charges against electrical discharges according to any of the previous claims, **characterized in that** the cap (6) comprises a recess (9) in the upper part of its outer face in order to make installing the cap (6) with conventional tools easier during the application of the installation tightening torque of the device (12).

6. A device (12) for protecting a conductive fixing element (5) of an aircraft subjected to high charges against electrical discharges according.to any of the previous claims, **characterized in that** the washer (7) comprises a bevel (13) in the inner lower part of its outer face, and **in that** the cap (6) comprises another bevel (14) in its inner lower part, such that the o-ring gasket (8) fits once installed in the groove generated by the bevels (13, 14).

7. A device (12) for protecting a conductive fixing element (5) of an aircraft subjected to high charges against electrical discharges according to any of claims 1 to 5, **characterized in that** the washer (7) comprises a channel (15) in the lower part of its outer face, the o-ring gasket (8) comprising an outer bevel (16), so that the mentioned o-ring gasket (8) fits in the groove of the washer (7), the cap (6) in turn being placed on the bevel (16) of the o-ring gasket (8).

8. A device (12) for protecting a conductive fixing element (5) of an aircraft subjected to high charges against electrical discharges according to any of the previous claims, **characterized in that** the cap (6) is made of a dielectric material such as nylon or a high resistance plastic.

9. A device (12) for protecting a conductive fixing element (5) of an aircraft subjected to high charges against electrical discharges according to any of the previous claims, **characterized in that** the o-ring gasket (8) is made of a flexible material with dielectric properties, such as nitrile rubber or silicone rubber.

## Patentansprüche

1. Flugzeugbeleuchtungs-Schutzvorrichtung (12) zum Schutz eines einer hohen Ladung ausgesetzten leitenden Befestigungselements (5) eines Flugzeugs gegen elektrische Entladungen,
**dadurch gekennzeichnet, dass** die Vorrichtung (12) eine Kappe (6) aus nichtleitendem Material, eine Zwischenscheibe (7) aus leitendem metallischen Material und einen O-Dichtring (8) aus nichtleitendem Material aufweist, der von der Zwischenscheibe (7) fixiert ist, wobei die Zwischenscheibe (7) in der Lage ist, von dem zu schützenden, einer hohen Ladung ausgesetzten Befestigungselement (5) rückgehalten zu werden, und die Kappe (6) und der O-Dichtring (8) in der Lage sind, das Befestigungselement (5) nichtleitend zu umgeben und somit die Möglichkeit einer elektrischen Entladung zu verhindern.

2. Vorrichtung (12) zum Schutz eines hohen Ladungen ausgesetzten leitenden Befestigungselements (5) eines Flugzeugs gegen elektrische Entladungen gemäß Anspruch 1, **dadurch gekennzeichnet, dass** die Kappe (6) ein zylindrischer offener Behälter ist, der an einem seiner Enden geschlossen und an dem anderen Ende offen ist, wobei die Kappe an dem unteren Bereich ihrer Innenfläche ein Gewinde (10) aufweist.

3. Vorrichtung (12) zum Schutz eines hohen Ladungen ausgesetzten leitenden Befestigungselements (5) eines Flugzeugs gegen elektrische Entladungen gemäß Anspruch 2, **dadurch gekennzeichnet, dass** die Zwischenscheibe (7) rund und dick ist, wobei die Zwischenscheibe (7) an ihrer Außenfläche ein zu dem Gewinde (10) der Kappe (6) komplementäres Gewinde (11) aufweist, um während der Installation der Vorrichtung (12) die Kappe (6) an der Zwischenscheibe (7) zu befestigen.

4. Vorrichtung (12) zum Schutz eines hohen Ladungen ausgesetzten leitenden Befestigungselements (5) eines Flugzeugs gegen elektrische Entladungen gemäß Anspruch 3, **dadurch gekennzeichnet, dass** das Gewinde (10,11) Eigenschaften zum automatischen Blockieren aufweist, um ein Trennen der Kappe (6) von der Zwischenscheibe (7) zu verhindern.

5. Vorrichtung (12) zum Schutz eines hohen Ladungen ausgesetzten leitenden Befestigungselements (5) eines Flugzeugs gegen elektrische Entladungen gemäß einem der vorhergehenden Ansprüche, **dadurch gekennzeichnet, dass** die Kappe (6) im oberen Bereich ihrer Außenfläche eine Ausnehmung (9) aufweist, um während der Aufbringung des Installations-Drehmoments für die Vorrichtung (12) das Installieren der Kappe (6) mittels herkömmlicher Werkzeuge zu erleichtern.

6. Vorrichtung (12) zum Schutz eines hohen Ladungen ausgesetzten leitenden Befestigungselements (5) eines Flugzeugs gegen elektrische Entladungen gemäß einem der vorhergehenden Ansprüche, **dadurch gekennzeichnet, dass** die Zwischenscheibe (7) im inneren unteren Bereich ihrer Außenfläche eine Fase (13) aufweist, und dass die Kappe (6) in ihrem inneren unteren Bereich eine weitere Fase (14) aufweist, derart, dass der O-Dichtring (8) nach seiner Installation in der durch die Fasen (13, 14) erzeugten Nut passend positioniert ist.

7. Vorrichtung (12) zum Schutz eines hohen Ladungen ausgesetzten leitenden Befestigungselements (5) eines Flugzeugs gegen elektrische Entladungen gemäß einem der Ansprüche 1 bis 5, **dadurch gekennzeichnet, dass** die Zwischenscheibe (7) in dem unteren Bereich ihrer Außenfläche ein Kanal (15) aufweist, wobei der O-Dichtring (8) eine äußere Fase (16) aufweist, so dass der erwähnte O-Dichtring (8) in die Nut der Zwischenscheibe (7) passt, wobei die Kappe (6) ihrerseits an der Fase (16) des O-Dichtrings (8) platziert ist.

8. Vorrichtung (12) zum Schutz eines hohen Ladungen ausgesetzten leitenden Befestigungselements (5) eines Flugzeugs gegen elektrische Entladungen gemäß einem der vorhergehenden Ansprüche, **dadurch gekennzeichnet, dass** die Kappe (6) aus einem dielektrischen Material wie z.B. Nylon oder hoch widerstandsfähigem Kunststoff ausgebildet ist.

9. Vorrichtung (12) zum Schutz eines hohen Ladungen ausgesetzten leitenden Befestigungselements (5) eines Flugzeugs gegen elektrische Entladungen gemäß einem der vorhergehenden Ansprüche, **dadurch gekennzeichnet, dass** der O-Dichtring (8) aus einem flexiblen Material mit dielektrischen Eigenschaften, wie z.B. Nitrilkautschuk oder Siliconkautschuk, ausgebildet ist.

## Revendications

1. Dispositif (12) de protection d'aéronef contre la foudre destiné à protéger un élément de fixation conducteur (5) d'un aéronef soumis à une charge élevée contre des décharges électriques, **caractérisé en ce que** le dispositif (12) comprend un capuchon (6) réalisé en matériau non conducteur, une rondelle (7) réalisée en matériau métallique conducteur et un joint torique (8) réalisé en matériau non conducteur retenu par la rondelle (7), la rondelle (7) étant adaptée pour être retenue par l'élément de fixation (5) soumis à une charge élevée qui doit être protégé, et le capuchon (6) et le joint torique (8) étant adaptés pour entourer de manière non conductrice l'élément de fixation (5), empêchant ainsi la possibilité de décharges électriques.

2. Dispositif (12) de protection d'un élément de fixation conducteur (5) d'un aéronef soumis à des charges élevées contre des décharges électriques selon la revendication 1, **caractérisé en ce que** le capuchon (6) est un réceptacle ouvert cylindrique fermé au niveau de l'une de ses extrémités et ouvert au niveau de l'autre, comprenant un filetage (10) dans la partie inférieure de sa face intérieure.

3. Dispositif (12) de protection d'un élément de fixation conducteur (5) d'un aéronef soumis à des charges élevées contre des décharges électriques selon la revendication 2, **caractérisé en ce que** la rondelle (7) est ronde et épaisse, comprenant un filetage (11) sur sa face extérieure, qui est complémentaire au filetage (10) du capuchon (6) pour fixer le capuchon (6) à la rondelle (7) pendant l'installation du dispositif (12).

4. Dispositif (12) de protection d'un élément de fixation conducteur (5) d'un aéronef soumis à des charges élevées contre des décharges électriques selon la revendication 3, **caractérisé en ce que** le filetage (10, 11) a des propriétés de blocage automatique pour empêcher le capuchon (6) de se séparer de la rondelle (7).

5. Dispositif (12) de protection d'un élément de fixation conducteur (5) d'un aéronef soumis à des charges élevées contre des décharges électriques selon l'une des revendications précédentes, **caractérisé en ce que** le capuchon (6) comprend un évidement (9) dans la partie supérieure de sa face extérieure afin de faciliter l'installation du capuchon (6) avec des outils conventionnels pendant l'application du couple de serrage d'installation du dispositif (12).

6. Dispositif (12) de protection d'un élément de fixation conducteur (5) d'un aéronef soumis à des charges élevées contre des décharges électriques selon l'une des revendications précédentes, **caractérisé en ce que** la rondelle (7) comprend un chanfrein (13) dans la partie inférieure intérieure de sa face extérieure, et **en ce que** le capuchon (6) comprend un autre chanfrein (14) dans sa partie inférieure intérieure, de sorte que le joint torique (8), une fois installé, s'ajuste dans la rainure générée par les chanfreins (13, 14).

7. Dispositif (12) de protection d'un élément de fixation conducteur (5) d'un aéronef soumis à des charges élevées contre des décharges électriques selon l'une des revendications 1 à 5, **caractérisé en ce que** la rondelle (7) comprend un canal (15) dans la partie inférieure de sa face extérieure, le joint torique (8) comprenant un chanfrein extérieur (16), de sorte que le joint torique mentionné (8) s'ajuste dans la rainure de la rondelle (7), le capuchon (6) à son tour étant placé sur le chanfrein (16) du joint torique (8).

8. Dispositif (12) de protection d'un élément de fixation conducteur (5) d'un aéronef soumis à des charges élevées contre des décharges électriques selon l'une des revendications précédentes, **caractérisé en ce que** le capuchon (6) est réalisé en un matériau diélectrique tel que le nylon ou une matière plastique à haute résistance.

9. Dispositif (12) de protection d'un élément de fixation conducteur (5) d'un aéronef soumis à des charges élevées contre des décharges électriques selon l'une des revendications précédentes, **caractérisé en ce que** le joint torique (8) est réalisé en un matériau souple présentant des propriétés diélectriques, tel que le caoutchouc nitrile ou le caoutchouc de silicone.
